# EUROPEAN PATENT SPECIFICATION

(11) **EP 2 486 330 B1**
(45) Date of publication and mention of the grant of the patent: **19.04.2017**
(21) Application number: 10776422.7
(22) Date of filing: 24.09.2010
(51) Int. Cl.: F24D 5/08, F24D 12/02, F24H 6/00, F24H 8/00, F24D 1/00

(54) **HIGH EFFICIENCY DEVICE FOR HEATING ENVIRONMENTS AND HEATING SYSTEM COMPRISING SUCH DEVICE**
HOCHWIRKSAME VORRICHTUNG FÜR RAUMERWÄRMUNG UND SYSTEM MIT EINER SOLCHEN VORRICHTUNG
APPAREIL À HAUTE EFFICACITÉ POUR CHAUFFAGE D'ESPACES ET SYSTÈME COMPRENANT LEDIT APPAREIL

(30) Priority: 25.09.2009 IT VI20090234
(43) Date of publication of application: 15.08.2012
(73) Proprietor: Officine Termotecniche Fraccaro S.r.l., 31033 Castelfranco Veneto (TV) (IT)
(72) Inventor: FRACCARO, Gimmi, I-31033 Castelfranco Veneto (TV) (IT)
(74) Representative: Maroscia, Antonio
(86) International application number: PCT/IB2010/054320
(87) International publication number: WO 2011/036645

(56) References cited:
- EP-A1- 0 075 526
- EP-A1- 0 228 569
- WO-A1-02/44627
- FR-A1- 2 854 229
- GB-A- 384 983
- GB-A- 2 324 146
- JP-A- 58 148 320
- US-A- 4 079 778
- US-A- 4 344 568
- US-A- 4 712 734

## Description

### Field of the invention

The present invention generally finds application in the field of heating devices and systems, and particularly relates to a room heating device, as well as a heating system comprising such device.

### Background art

Room heating, for both industrial and civil uses, is known to be obtained using various technologies.

A typical heating system comprises a burner adapted to burn an air-fuel mixture, generally methane gas, to produce high temperature combustion products.

The latter may be used to heat a working fluid, such as water, which is designed to circulate in a radiant circuit at least partially located in the room to be heat to transfer part of the heat thereto.

For instance, EP0228569 discloses a heating system in which combustion products exchange heat with a heating system in which water is forcibly circulated to be conveyed, in heated form to a radiator located in the room to be heated.

Once combustion products have released part of their heat to the liquid, they are exhausted through an exhaust chimney.

A similar system is also disclosed in US 4079778, in which combustion products from a furnace are forced to circulate in an exhaust conduit about which a circuit, with liquid circulating therein, is coiled. The liquid so heated is conveyed to a radiator located in the room to be heated.

Nevertheless, these solutions have the apparent drawback of not allowing optimal exploitation of heat of combustion products, due to the heat exchange with the liquid and inevitable heat losses along the path followed by the liquid from the heat exchange zone to the radiant element.

WO02/44627 discloses a heating system comprising, as is known, a boiler designed to burn a fluid and produce combustion product.

Combustion products are conveyed to a radiant circuit that extends through a room to release part of the residual heat thereto, thereby providing radiant heating and to be later exhausted through an exhaust chimney.

However, one or more heat exchangers are also placed in the radiant circuit, for reclaiming a further part of heat from flue gases to release it to a liquid designed to be conveyed to another room to be heated.

Nevertheless, this additional heat exchange step is also affected by serious inefficiencies, because a considerable part of the heat released to the liquid is lost in its flow toward the room to be heated.

Furthermore, the carrier fluid downstream from these heat exchangers is at an excessively low temperature, which is not sufficient to maintain adequate radiant efficiency, and considerably lowers performance.

A further drawback of the above systems is that none of them affords sufficient reclamation of heat associated with combustion products, which flow out of the chimney at a much higher temperature than ambient temperature.

Finally, the European Patent EP-B1-0647819 discloses a heating system which essentially includes a burner, a radiant circuit and a chimney for exhaustion of the combustion products of the burner.

The burner is adapted to burn an air-fuel mixture to introduce the combustion products into the radiant circuit. The latter is placed in the room to be heated and generally has one or more tubular conduits having a heat-conducting peripheral surface, which is designed to be in direct contact with the room to be heated, to transfer the heat of the products thereto by radiation.

This device has been found to be particularly efficient, and to exhibit a high thermal efficiency, but is still susceptible of improvements concerning energy efficiency itself.

US-B-4712734 discloses a heating system comprising all the features mentioned in the preamble of the annexed claim 1. This system can be further improved to reclaim heat from the exhaust flue and release it in the same room heated by the radiant circuit.

### Disclosure of the invention

The object of the present invention is to at least partially overcome the above drawbacks, by providing a highly energy-efficient radiant heating device.

Another object of the invention is to provide a system that effectively returns the heat reclaimed from the flue gases of a radiant heating device.

These and other objects, as better explained hereafter, are fulfilled by a radiant heating device as defined in claim 1.

The provision of a radiant circuit having a conduit with an outer heat-conducting peripheral surface in direct contact with the room to be heated and through which a fluid having a high-temperature gaseous phase is conveyed, will provide highly efficient room heating.

Furthermore, the provision of the heat recuperator affords reclamation of both the sensible heat from the flue gases and the latent heat from evaporation of the combustion products of the burner, which considerably increases the energy efficiency of the device.

The output of the cooling circuit is adapted to be in fluid connection with a heating circuit of a second heating device that is located in the room to heat it in cooperation with the radiant circuit.

As used herein, the term "cooling circuit" or derivatives thereof is intended to designate a fluid path in which fluid circulates in the liquid and/or gaseous states, for acquiring heat by exchange with another fluid.

As used herein, the term "recuperator fluid" or derivatives thereof is intended to designate a fluid in the gaseous and/or liquid states, circulating in a cooling circuit and designed to acquire heat by exchange with another fluid.

As used herein, the term "heating circuit" or derivatives thereof is intended to designate a fluid path in which fluid circulates in the liquid and/or gaseous states, for releasing heat by exchange with another fluid.

As used herein, the term "heating fluid" or derivatives thereof is intended to designate a fluid in the gaseous and/or liquid states, circulating in a heating circuit and designed to release heat by exchange with another fluid.

As used herein, the term "radiant circuit" or derivatives thereof is intended to designate a fluid path in which a heat carrier fluid circulates to heat, mainly by radiation, the room in which the circuit is integrated.

In a further aspect, the invention relates to a room heating system as defined in claim 12. The first heating device may have one or more of the characteristics as defined in claims 1 to 11.

Thus, the sensible heat and/or the latent evaporation heat reclaimed from the combustion products of the burner may be effectively returned to the room.

Advantageous embodiments of the invention are defined in accordance with the dependent claims.

### Brief description of the drawings

Further characteristics and advantages of the invention will become more apparent upon reading of the detailed description of a few preferred, non exclusive embodiments of a device and a system of the invention, which are described as non limiting examples with the help with the accompanying drawings in which:

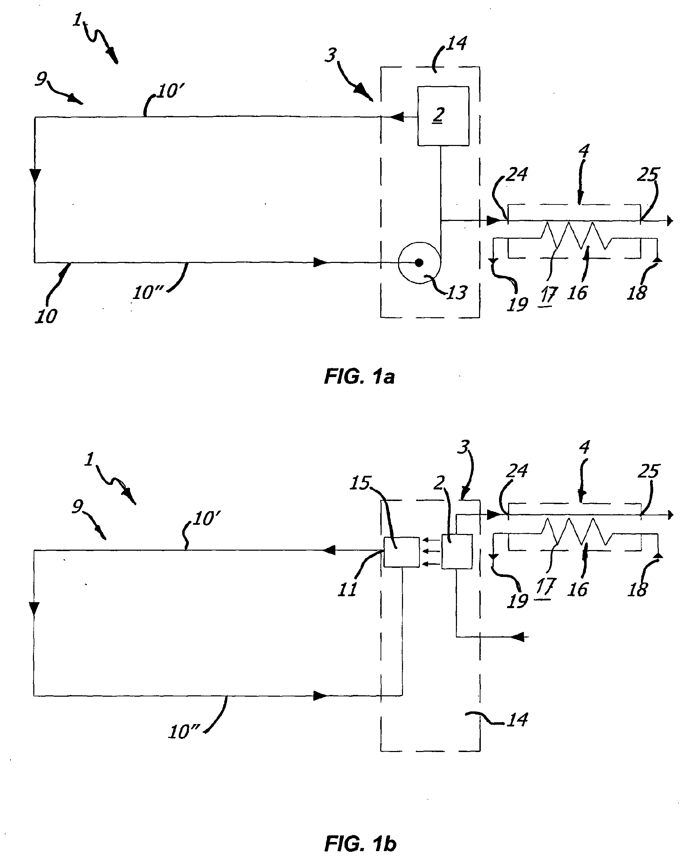

FIG. 1a is a schematic view of a device, which does not form part of the invention FIG. 1b is a schematic view of a second embodiment of a device 1, which does not form part of the invention;

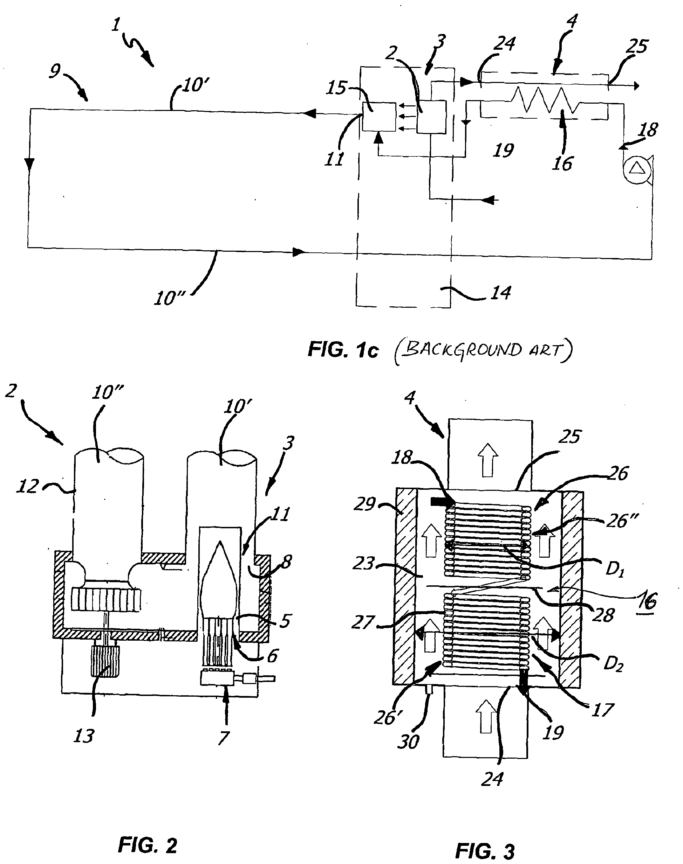

FIG. 1c is a schematic view of a device 1, which does not form part of the invention;
FIG. 1b is a schematic view of a second embodiment of the device 1;
FIG. 2 is a schematic sectional view of a burner 2 of the device of Fig. 1a;
FIG. 3 is a schematic sectional view of an exemplary embodiment of the chimney 4 of the device 1, in which the fluid path of flue gases is shown by empty arrows, whereas the fluid flow path of the cooling fluid is shown by solid arrows;
FIG. 4a is a schematic view of a first embodiment of the system 31, which integrates the embodiment of the device 1 of FIG. 1a;
FIG. 4b is a schematic view of a second embodiment of the system 31, which integrates the embodiment of the device 1 of FIG. 1a.

### Detailed description of a preferred embodiment

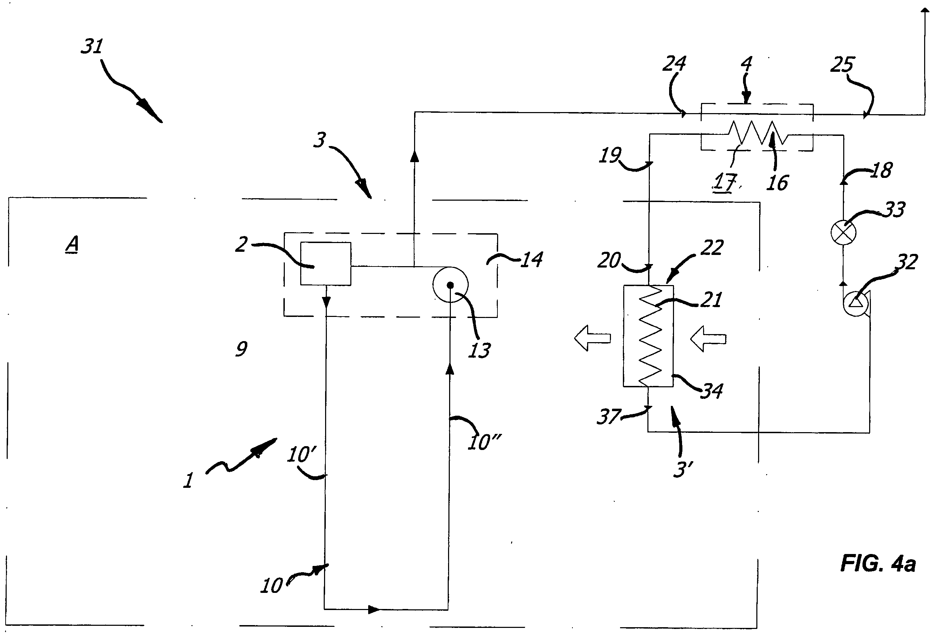

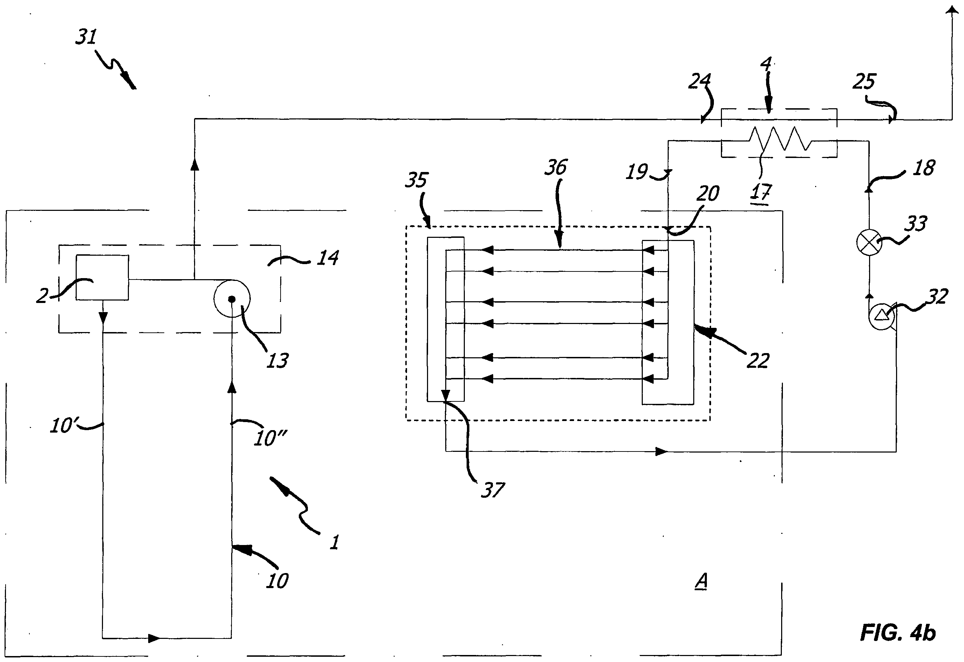

Referring to the above figures, the device of the invention, generally designated by numeral 1, is particularly useful for radiant heating of rooms A, preferably medium-to-large, preferably closed rooms, as shown in Figures 4a and 4b by broken lines.

Three different exemplary configurations for the heating system of the invention are shown in Figs. 4a and 4b.

Basically, the device 1 comprises a burner 2, that can burn an air/fuel mixture, heating means 3 and a chimney 4 for exhaustion of the combustion products of the burner 2.

For example, the fuel may be a fluid selected, by way of example, from the group comprising methane, butane, propane, gasoil or the like.

As shown in the scheme of Fig. 2, the burner 2 basically comprises a combustion chamber 5 having an inlet 6 for the fluid or fuel mixture, mixture burning means 7 for obtaining combustion products having at least one gaseous phase.

The combustion products have a predetermined combustion temperature, whose value depends on the particular fluid being burnt.

The combustion chamber 5 also has an outlet 8 for the combustion products that are still substantially at the combustion temperature. The heating means 3 comprise in turn a radiant circuit 9 that may be basically composed, as is known, of at least one closed-loop conduit or pipe 10, with a forward branch 10' and a backward branch 10". The conduit 10 can be placed in the room A, preferably in the higher part thereof,where it can be heated by radiant heat.

Furthermore, the heating means 3 are operably connected with the outlet 8 of the combustion chamber 5 and are configured to produce a heating fluid having at least one gaseous phase, which is designed to be carried into the conduit 10 and circulate therein.

For this purpose, the latter has an inlet 11 for the heating fluid and an outer heat-conducting peripheral surface 12 designed to be in direct contact with the room A to be heated, so that the heat of the heating fluid may be directly transferred thereto by radiant heating.

In order to further improve heat efficiency, the conduit 10 may be held in an insulated housing frame, not shown, e.g. made of galvanized steel, coextending with the conduit 10 and having an open-sided cross section, so that the only exposed portion is the longitudinal portion of the outer peripheral surface 12 designed to face downwards toward the room to be heated A.

In FIG. 1a, the burner 2 is directly connected with the radiant circuit 9, so that high temperature flue gases of the former are directly introduced into the latter and act as a carrier fluid for radiant heating of the room A.
In this case, the device 1 may include a fan or a similar means 13, which is adapted to circulate the flue gases in the closed-loop conduit 10 that forms the radiant circuit 9. For minimized space requirement, both the burner 2 and the fan 13 may be contained in a box-like body 14.

In a further embodiment, as shown in Fig. 1b, the burner 2 may operably interact with a steam generator 15. The latter may be in fluid connection with the radiant conduit 10, so that the generated steam may be introduced therein, and act as a carrier fluid for radiant heating of the room A. Both the burner 2 and the steam generator 15 may be contained in the box-like body 14.

The chimney 4 comprises a heat recuperator 16, e.g. a capacitor, more clearly shown in Fig. 3, which has a secondary cooling circuit 17 adapted to exchange heat with the flue gases flowing out of the burner 2 to at least partially draw both sensible heat and latent evaporation heat therefrom.
For this purpose, the secondary circuit 17 may include an inlet 18 for a recuperator fluid, which may preferably be a liquid. Advantageously, the latter may be selected from water and/or glycol.

In the embodiment of the device 1 which does not form part of the invention but represents background art that is useful for the understanding of the invention, as shown in FIG. 1c, the burner 2 may operably interact with a steam generator 15, which may be in fluid connection with the radiant circuit 9 so that the generated steam may be introduced therein.

The radiant circuit 9 may in turn be in fluid connection with the inlet 18 of the secondary circuit 17, for the fluid circulating therein to both act as a carrier fluid in the radiant circuit 9 for radiant heating of the room A and as a cooling fluid in the circuit 17.

Thus, the latter will be preheated in the chimney 4 before accessing the steam generator 15, thereby increasing the energy efficiency of the device 1.

On the other hand, as shown for instance in FIGS. 4a and 4b, the cooling circuit 17 has an outlet 19 is connected to the inlet 20 of the heating circuit 21 of a second heating device 22, also designed to be placed in the room A, for heating thereof in combination with the radiant circuit 9.

The cooling circuit 17, that may be of any type, may operably interact with the heating circuit of the chimney 4, also of any type, so that the fluids circulating therein, i.e. the recuperator or cooling fluid and the heating fluid respectively, exchange heat with each other.

As a result, the flue gases from the burner 2 will flow over the secondary circuit 17 that contains the recuperator fluid, as shown in Fig. 3. Thus, the heat drawn from flue gases may be effectively returned to the room A.

The chimney 4 includes a heat exchange chamber 23 that may define a heating circuit of the chimney 4, with an inlet 24 in fluid connection with the burner 2 for collecting combustion products, and an outlet 25 in fluid connection with the outside, to disperse the flue gases outside once they have been cooled, thereby minimizing thermal pollution thereof.

Still as shown in Fig. 3, the secondary circuit 17 may consist of a pipe 26, advantageously located in the chamber 23, so that the flue gases of the burner 2 flowing in the chamber 23 can flow over the outer surface 27 of the pipe 26.

Furthermore, in order to maximize the heat exchange surface, the pipe 26 may be a coil having a generally elliptical plan shape, with a maximum dimension D₁ smaller than the diameter D₂ of the chamber 23.

This particular configuration of the pipe 26 allows flue gases to be directed between the turns thereof, thereby increasing the heat exchange surface and hence the energy efficiency of the device 1.

Also, a plurality of baffles 28 may be provided, appropriately arranged to increase the flue gas turbulence, thereby further improving heat exchange and hence energy efficiency of the device 1.

Also, the chamber 23 may conveniently comprise an insulation jacket 29 at its periphery.

Advantageously, the pipe 26 that forms the secondary circuit 17 may be of modular type, i.e. comprising a plurality of pipe branches of known surface area, for instance and without limitation the two branches 26', 26" in fluid connection with each other.

This configuration imparts a higher versatility to the heat recuperator 16, which may be conveniently sized, according to the required exchange surface, by assembling multiple prefabricated modules.

A condensation drain 30 may be conveniently provided on the bottom of the chamber 23.

In a further variant, not shown, that may be particularly implemented with devices as shown in Figs. 1b, c, vacuum means may be provided for creating a negative pressure in the radiant conduit 10, thereby facilitating the formation of steam at low temperatures.

In short, the system 31 may generally comprise a first heating device, consisting of the device 1, and a second heating device 22. The two heating devices 1 and 22 may have heating means 3, 3', both located in the room A, for combined heating thereof.

The heating circuit 21 of the second heating device 22 may have the inlet 20 in fluid connection with the outlet 19 of the secondary circuit 17 of the heat recuperator 16, so that the heat extracted from the flue gases of the burner 2 may be returned to the room A.

Advantageously, the outlet 37 of the heating circuit 21 of the second heating device 22 may be in fluid connection with the inlet 18 of the secondary circuit 17 of the heat recuperator 16, with suitable cooling fluid pumping means 32 interposed therebetween.

Advantageously, these pumping means 32 may include either a pump or the like if the cooling fluid is a liquid, or a compressor or the like of the cooling fluid is a gas.

Valve means 33, e.g. a ball valve, may be suitably provided to regulate the flow of cooling fluid in the circuits 17 and 21.

The second heating device 22 may be of any type, provided its heating circuit 21 is in fluid connection with the secondary circuit 17 of the heat recuperator 16 so that the cooling fluid circulating therein is also the heating fluid that circulates in the first.

The second heating device 22 may heat the room A by convection heating and/or radiant heating.

In a preferred, non-limiting embodiment, as shown in FIG. 4a, the second heating device 22 may include a box-like body 34, with the heating circuit 21 contained therein, and means for forced convection of outside air on said heating circuit 21 and introduction of the air so heated into the room A.

For instance, there may be a fan, not shown and known per se, for drawing air from outside, causing it to flow over the heating circuit 21 and introducing it into the room A once it has been heated.

The fan may draw air both directly from the room A to be heated and outside it, for pre-heating fresh air, thereby further increasing the efficiency of heat exchange in the second heating device 22.

For this purpose, the box-like body 34 may have one or more apertures for putting the heating circuit 21 in fluid communication with the outside and/or with the room A, which are not shown and also known per se.

Particularly, in this embodiment, the second heating device 22 may be a fan heater or a similar device.

In another embodiment, as shown in Fig. 4b, the second heating device 22 may comprise a main body 35 with a plurality of radiant tubes 36, which are located in the room for radiant heating thereof.

In this embodiment, the heating circuit 21 is composed of the radiant tubes 36 of the main body 35. As a result, the heating fluid also acts as a heat carrier fluid, and heats the room A directly, with no further intermediate heat exchange.

Therefore, the fluid that circulates in the closed loop for fluid connection between the inlet 18 and the outlet 19 of the cooling circuit 17, the inlet 20 and the outlet 37 of the heating circuit 21 will first act as a cooling fluid in the secondary circuit 17 of the heat recuperator 16 and then also both as a heating fluid and as a heat carrier in the heating circuit 21, to entirely return the extracted heat to the room.

Particularly, in this embodiment, the second heating device 22 may be one or more water and/or steam radiant panels.

The above disclosure clearly shows that the device and system of the invention achieve the intended objects. Particularly, by mounting the heat recuperator 16 to the chimney 4, both sensible and latent heat may be reclaimed from the flue gases of the burner 2, which will increase the energy efficiency of the device 1.

Fluid connection between the secondary circuit 17 and the heating circuit 21 also allows the reclaimed heat to be effectively returned to the room A. Therefore, a single evolving fluid circulates in both circuits, and acts as a cooling fluid in the circuit 17 and as a heating fluid in the circuit 21.

The system of the invention is susceptible to a number of changes or variants, within the inventive concept disclosed in the appended claims. All the details thereof may be replaced by other technically equivalent parts, and the materials may vary depending on different needs, without departure from the scope of the invention.

While the system has been described with particular reference to the accompanying figures, the numerals referred to in the disclosure and claims are only used for the sake of a better intelligibility of the invention and shall not be intended to limit the claimed scope in any manner.

## Claims

1. A system for heating of rooms, comprising at least one first radiant device (1) and at least one second heating device (22) located in a same room (A) for heating it in combination with said first device (1), said first radiant device (1) comprising:
- a burner (2) with a combustion chamber (5);
- a chimney (4) in fluid connection with said chamber (5) for the expulsion of the combustion products of said burner (2);
- heating means (3) operably connected with said combustion chamber (5) and designed to produce a heating carrier fluid comprising at least one gaseous phase;
wherein said heating means (3) comprise a radiant circuit (9) having a closed-loop conduit (10) with an outer heat-conducting radiating surface (12) designed for direct contact with the room (A) for radiance heating thereof, said combustion chamber (5) having an outlet (8) for said combustion products directly connected to said radiant circuit (9) or operably interacting with a steam generator (15) which is in fluid connection with said radiant circuit (9);
wherein said chimney (4) comprises a heat recuperator (16) for at least partial recovery of sensible heat and latent heat from the combustion products of said burner (2), said heat recuperator (16) comprising a heat exchange chamber (23) for the flow of the combustion products of said burner (2) and a secondary circuit (17) housed into said heat exchange chamber (23) for a recuperator fluid to flow therethrough;
wherein said exchange chamber (23) has an inlet (24) in fluid connection with said burner (2) for collecting the combustion products thereof and an outlet (25) in fluid connection with the outside;
**characterized in that** said at least one second heating device (22) contains a heating circuit (21), said secondary circuit (17) having an outlet (19) connected to said heating circuit (21) located in the same room (A) for at least partially returning the recovered heat thereto, said chimney (4), said heat recuperator (16) and said secondary circuit (17) being located outside of said room (A), said secondary circuit (17) having an inlet (18) for a recuperator fluid, said heating circuit (21) of said at least one second heating device (22) having an inlet (20) in fluid connection with said outlet (19) of the secondary circuit (17) and an outlet (37) in fluid connection with the inlet (18) of said secondary circuit (17) with suitable cooling and pumping means interposed therebetween (32) to circulate in a closed loop the recuperator fluid acting as a heat carrier to return the extracted heat directly to the room (A) with no further intermediate heat exchange.

2. System as claimed in claim 1, **characterized in that** said secondary circuit (17) comprises a pipe (26) located in said heat exchange chamber (23) for the flue gases of the burner (2) to lick over the outer surface (27) thereof, said circuit (9) comprising a closed-loop radiant conduit (10) with a forward branch (10') and a backward branch (10"), said secondary circuit (17) being connected to said circuit (9) for at least partially returning the recovered heat into said forward branch (10').

3. System as claimed in claim 2, **characterized in that** said pipe (26) is a coil having a generally elliptical plan shape, with a maximum dimension (D₁) smaller than the diameter (D₂) of said heat exchange chamber (23).

4. System as claimed in claim 2 or 3, **characterized in that** said heat exchange chamber (23) comprises a plurality of baffles (28) for increasing flue gas turbulence.

5. System as claimed in one or more of claims 2 to 4, **characterized in that** said pipe (26) is of modular type, with a plurality of prefabricated piping branches (26', 26") in fluid connection with each other.

6. System as claimed in one or more of the claims 2 to 5, wherein said heat exchange chamber (23) comprises an insulation jacket (29).

7. System as claimed in one or more of the claims 2 to 6, wherein said heat exchange chamber (23) comprises an opening (30) for condensation drainage.

8. System as claimed in one or more of the claims 2 to 7, wherein said burner (2) is directly connected to said forward branch (10') of said radiant conduit (10) to introduce therein said combustion products substantially at said combustion temperature.

9. System as claimed in one or more of claims 1 to 7, wherein said steam generating device (15) is in fluid connection with said outlet (8) of said combustion chamber (5) of said burner (2) and with said inlet (11) of said radiant conduit (10) to introduce the generated steam therein.

10. System as claimed in one or more of the preceding claims, wherein said recuperator fluid is a liquid, preferably selected from water and/or glycol.

11. System as claimed in claim 1, wherein cooling fluid pumping means (23) are interposed between said outlet (37) of said heating circuit (21) and said inlet (18) of said secondary circuit (17).

12. System as claimed in claim 1, wherein said at least one second heating device (22) has means for forced convection of outside air on said heating circuit (21) and introduction of the air so heated into the room (A).

13. System as claimed in claim 1, wherein said at least one second heating device (22) comprises a plurality of radiant tubes (36) placed in the room (A) for radiance heating thereof, said heating circuit (21) being constituted by said radiant tubes (36).

## Patentansprüche

1. Ein System zum Beeizen von Räumen, mit mindestens einer ersten Radiatorvorrichtung (1) und mindestens einer zweiten Heizvorrichtung (22), die in einem selben Raum (A) angeordnet ist, um diesen zusammen mit der ersten Vorrichtung (1) zu heizen, wobei die erste Radiatorvorrichtung (1) umfasst:
- einen Brenner (2) mit einer Verbrennungskammer (5),
- einen Kamin (4), der in fluidischer Verbindung ist mit der Kammer (5) für den Ausstoß der Verbrennungserzeugnisse des Brenners (2),
- Heizeinrichtungen (3), die funktional verbunden sind mit der Verbrennungskammer (5) und ausgelegt sind, ein wärmetragendes Fluid zu erzeugen, das mindestens eine gasförmige Phase aufweist,
- wobei die Heizeinrichtungen (3) einen Radiatorkreislauf (9) umfassen, der eine als geschlossene Schleife ausgelegte Leitung (10) aufweist mit einer äußeren, wärmeleitenden Radiatorfläche (12), die ausgelegt ist für direkten Kontakt mit dem Raum (A), um diesen mittels Strahlung zu heizen, wobei die Verbrennungskammer (5) einen Auslass (8) aufweist für die Verbrennungserzeugnisse, der direkt verbunden ist mit dem Radiatorkreislauf (9) oder funktional zusammen wirkt mit einem Dampferzeuger (15), der in fluidischer Verbindung steht mit dem Radiatorkreislauf (9).
- wobei der Kamin (4) eine Wärmerückgewinnung (16) aufweist für die zumindest teilweise Rückgewinnung fassbarer Wärme und latenter Wärme aus den Verbrennungserzeugnissen des Brenners (2), wobei die Wärmerückgewinnung (16) eine Wärmetauscherkammer (23) aufweist für den Durchsatz der Verbrennungserzeugnisse des Brenners (2) und einen zweiten Kreislauf (17), der in der Wärmetauscherkammer (23) unter gebracht ist für ein Rückgewinnungsfluid, das durch diesen hindurch fließt,
- wobei diese Tauscherkammer (23) einen Zulauf (24) aufweist, der in fluidischer Verbindung steht mit dem Brenner (2) zur Aufnahme von dessen Verbrennungserzeugnissen und einen Auslauf (25), der in fluidischer Verbindung steht mit der Umgebung,
**dadurch gekennzeichnet, dass** die mindestens eine zweite Heizvorrichtung (22) einen Wärmekreislauf (21) enthält, wobei der zweite Kreislauf (17) einen Auslass (19) hat, der verbunden ist mit dem Wärmekreislauf (21), der in dem selben Raum (A) angeordnet ist, um mindestens teilweise die zurück gewonnene Wärme dahin zurück zu geben, wobei der Kamin (4), die Wärmerückgewinnung (16) und der zweite Kreislauf (17) außerhalb des Raums (A) angeordnet sind, und der zweite Kreislauf (17) einen Einlass (18) aufweist für ein Wärmerückgewinnungsfluid, der Wärmekreislauf (21) der mindestens einen zweiten Heizvorrichtung (22) einen Einlass (20) hat, der in fluidischer Verbindung ist mit dem Auslass (19) des zweiten Kreislaufs (17) und einen Auslass (37), der in fluidischer Verbindung ist mit dem Einlass (18) des zweiten Kreislaufs (17) mit geeigneten Kühl- und Pumpeinrichtungen, die dazwischen gesetzt sind (32), um Rückgewinnungsfluid in einem geschlossenen Kreislauf zu fördern, das als Wärmeträger fungiert, um die entnommene Wärme direkt an den Raum (A) zurück zu geben ohne weiteren Wärmetausch dazwischen.

2. System gemäß Anspruch 1, **dadurch gekennzeichnet, dass** der zweite Kreislauf (17) eine Leitung (26) umfasst, die in der Wärmetauscherkammer (23) angeordnet ist, damit die Abgase des Brenners (2) über deren äußere Oberfläche (27) streichen, wobei der Kreislauf (9) eine als geschlossene Schleife ausgelegte Radiatorleitung (10) umfasst mit einem vorderen Zweig (10') und einem hinteren Zweig (10") und der zweite Kreislauf (17) angeschlossen ist an den Kreislauf (9) für die zumindest teilweise Rückgabe der zurück gewonnenen Wärme in den vorderen Zweig (10').

3. System gemäß Anspruch 2, **dadurch gekennzeichnet, dass** die Leitung (26) eine Spule ist mit einer allgemein elliptischen, ebenen Form mit einer maximalen Abmessung (D₁), die kleiner ist als der Durchmesser (D₂) der Wärmetauscher-kammer (23).

4. System gemäß Anspruch 2 oder 3, **dadurch gekennzeichnet, dass** die Wärmetauscherkammer (23) eine Vielzahl von Prallblechen (28) aufweist, um die Turbulenzen des Abgases zu erhöhen.

5. System gemäß einem oder mehreren der Ansprüche 2 bis 4, **dadurch gekennzeichnet, dass** die Leitung (26) als Baukasten ausgebildet ist mit einer Vielzahl von vorgefertigten Leitungsstücken (26', 26"), die in fluidischer Verbindung mit einander sind.

6. System gemäß einem oder mehreren der Ansprüche 2 bis 5, **dadurch gekennzeichnet, dass** die Wärmetauscherkammer (23) mit einem Isolationsmantel (29) versehen ist.

7. System gemäß einem oder mehreren der Ansprüche 2 bis 6, **dadurch gekennzeichnet, dass** die Wärmetauscherkammer (23) zur Abgabe von Kondensat mit einer Öffnung (30) versehen ist.

8. System gemäß einem oder mehreren der Ansprüche 2 bis 7, **dadurch gekennzeichnet, dass** der Brenner (2) direkt verbunden ist mit dem vorderen Zweig (10') der Radiatorleitung (10), um in diese die Verbrennungserzeugnisse mit im Wesentlichen der Verbrennungstemperatur einzuleiten.

9. System gemäß einem oder mehreren der Ansprüche 1 bis 7, **dadurch gekennzeichnet, dass** die Dampferzeugervorrichtung (15) in fluidischer Verbindung ist mit dem Auslass (8) der Brennkammer (5) des Brenners (2) und mit dem Einlass (11) der Radiatorleitung (10), um in diese den erzeugten Dampf einzuleiten.

10. System gemäß einem oder mehreren der vorhergehenden Ansprüche, **dadurch gekennzeichnet, dass** das Rückgewinnungs-Fluid eine Flüssigkeit ist, die vorzugsweise zwischen Wasser und/oder Glykol ausgewählt wurde.

11. System gemäß Anspruch 1, **dadurch gekennzeichnet, dass** Pumpeinrichtungen (23) für Kühlfluid zwischen dem Auslass (37) des Wärmekreislaufs (21) und dem Einlass (18) des zweiten Kreislaufs (17) angeordnet sind.

12. System gemäß Anspruch 1, **dadurch gekennzeichnet, dass** die mindestens eine zweite Heizvorrichtung (22) mit Einrichtungen versehen ist für erzwungene Konvektion von Aussenluft an dem Wärmekreislauf (21) und die Zufuhr von so erwärmter Luft in den Raum (A).

13. System gemäß Anspruch 1, **dadurch gekennzeichnet, dass** die mindestens eine zweite Heizvorrichtung (22) mit einer Vielzahl von Radiatorrohren (36) versehen ist, die in dem Raum (A) angeordnet sind, um aus diesem Wärme abzustrahlen, wobei der Wärmekreislauf (21) aus diesen Radiatorrohren (36) gebildet ist.

## Revendications

1. Système de chauffage de pièces, comprenant au moins un premier dispositif radiant (1) et au moins un second dispositif de chauffage (22) situé dans la même pièce (A) pour chauffer celle-ci en association avec ledit premier dispositif (1), ledit premier dispositif radiant (1) comprenant :
- un brûleur (2) avec une chambre de combustion (5) ; - une cheminée (4) en connexion fluidique avec ladite chambre (5) pour l'éjection des produits de combustion dudit brûleur (2) ;
- des moyens de chauffage (3) en connexion fonctionnelle avec ladite chambre de combustion (5) et conçus pour produire un fluide caloporteur comprenant au moins une phase gazeuse ;
dans lequel lesdits moyens de chauffage (3) comprennent un circuit radiant (9) comportant un conduit en boucle fermée (10) avec une surface de radiation extérieure (12) thermoconductrice conçue pour être en contact direct avec la pièce (A) pour chauffer celle-ci par radiation, ladite chambre de combustion (5) présentant une sortie (8) pour lesdits produits de combustion, directement reliée audit circuit radiant (9) ou en interaction fonctionnelle avec un générateur de vapeur (15), qui est en connexion fluidique avec ledit circuit radiant (9) ;
dans lequel ladite cheminée (4) comprend un récupérateur de chaleur (16) pour au moins une partie de la chaleur sensible et de la chaleur latente provenant des produits de combustion dudit brûleur (2), ledit récupérateur de chaleur (16) comprenant une chambre d'échange thermique (23) pour l'écoulement des produits de combustion dudit brûleur (2) et un circuit secondaire (17) logé dans ladite chambre d'échange thermique (23) et destiné à être parcouru par un fluide de récupération ;
dans lequel ladite chambre d'échange (23) comporte une entrée (24) en connexion fluidique avec ledit brûleur (2) pour recueillir les produits de combustion de celui-ci, et une sortie (25), en connexion fluidique avec l'extérieur ;
**caractérisé en ce que** ledit au moins un second dispositif de chauffage (22) contient un circuit de chauffage (21), ledit circuit secondaire (17) présentant une sortie (19) reliée audit circuit de chauffage (21) situé dans la même pièce (A) pour retourner à la pièce au moins une partie de la chaleur récupérée, ladite cheminée (4), ledit récupérateur de chaleur (16) et ledit circuit secondaire (17) étant situés à l'extérieur de ladite pièce (A), ledit circuit secondaire (17) comportant une entrée (18) pour un fluide de récupération, ledit circuit de chauffage (21) dudit au moins un second dispositif de chauffage (22) comportant une entrée (20) en connexion fluidique avec ladite sortie (19) du circuit secondaire(17) et une sortie (37) en connexion fluidique avec l'entrée (18) dudit circuit secondaire (17) avec des moyens appropriés de refroidissement et de pompage interposés entre ceux-ci (32) pour faire circuler en boucle fermée le fluide de récupération faisant fonction de caloporteur pour retourner à la pièce (A) la chaleur récupérée sans aucun autre échange thermique intermédiaire.

2. Système selon la revendication 1, **caractérisé en ce que** ledit circuit secondaire (17) comprend un tuyau (26) situé dans ladite chambre d'échange thermique (23) pour que les gaz de combustion du brûleur (2) lèchent la surface extérieure (27) de celui-ci, ledit circuit (9) comprenant un conduit radiant en boucle fermée (10) avec une branche avant (10') et une branche arrière (10"), ledit circuit secondaire (17) étant relié audit circuit (9) pour retourner au moins une partie de la chaleur récupérée dans ladite branche avant (10').

3. Système selon la revendication 2, **caractérisé en ce que** ledit tuyau (26) est un serpentin ayant une forme en plan généralement elliptique, avec une dimension maximale (D₁) inférieure au diamètre (D₂) de ladite chambre d'échange thermique (23).

4. Système selon la revendication 2 ou 3, **caractérisé en ce que** ladite chambre d'échange thermique (23) comprend une pluralité de déflecteurs (28) susceptibles d'augmenter la turbulence des gaz de combustion.

5. Système selon l'une ou plusieurs des revendications 2 à 4, **caractérisé en ce que** ledit tuyau (26) est du type modulaire, avec une pluralité de branches de canalisation préfabriquées (26', 26") en connexion fluidique l'une avec l'autre.

6. Système selon l'une ou plusieurs des revendications 2 à 5, dans lequel ladite chambre d'échange thermique (23) comprend une enveloppe isolante (29).

7. Système selon l'une ou plusieurs des revendications 2 à 6, dans lequel ladite chambre d'échange thermique (23) comprend une ouverture (30) pour le drainage du condensat.

8. Système selon l'une ou plusieurs des revendications 2 à 7, dans lequel ledit brûleur (2) est relié directement avec ladite branche avant (10') dudit conduit radiant (10) pour introduire dans celui-ci lesdits produits de combustion sensiblement à ladite température de combustion.

9. Système selon l'une ou plusieurs des revendications 1 à 7, dans lequel ledit dispositif générateur de vapeur (15) est en connexion fluidique avec ladite sortie (8) de ladite chambre de combustion (5) dudit brûleur (2) et avec ladite entrée (11) dudit conduit radiant (10) pour introduire dans celle-ci la vapeur générée.

10. Système selon l'une ou plusieurs des revendications précédentes, dans lequel ledit fluide de récupération est un liquide, de préférence choisi entre l'eau et/ou le glycol.

11. Système selon la revendication 1, dans lequel des moyens de pompage de fluide réfrigérant (23) sont interposés entre ladite sortie (37) dudit circuit de chauffage (21) et ladite entrée (18) dudit circuit secondaire (17).

12. Système selon la revendication 1, dans lequel ledit au moins un second dispositif de chauffage (22) comporte des moyens pour la convection forcée d'air de l'extérieur sur ledit circuit de chauffage (21) et l'introduction de l'air ainsi chauffé dans la pièce (A).

13. Système selon la revendication 1, dans lequel ledit au moins un second dispositif de chauffage (22) comprend une pluralité de tubes radiants (36) situés dans la pièce (A) pour le chauffage de celle-ci par radiation (21), ledit circuit de chauffage (21) étant constitué desdits tubes radiants (36).
